# EUROPÄISCHE PATENTSCHRIFT

(11) **EP 4 033 162 B1**
(45) Veröffentlichungstag und Bekanntmachung des Hinweises auf die Patenterteilung: **13.11.2024**
(21) Anmeldenummer: 22151757.6
(22) Anmeldetag: 17.01.2022
(51) Int. Cl.: F24D 19/00, C02F 5/00, A47J 27/04

(54) **FLUIDVERDAMPFER FÜR EIN DAMPFGARGERÄT MIT SPEZIFISCHEM FILTERROHR ZUR FILTERUNG VON KALKPARTIKELN, SOWIE DAMPFGARGERÄT**
FLUID EVAPORATOR FOR A STEAM COOKING APPLIANCE WITH A SPECIFIC FILTER TUBE FOR FILTERING LIMESCALE PARTICLES AND STEAM COOKING APPLIANCE
ÉVAPORATEUR DE FLUIDE POUR UN APPAREIL DE CUISSON À VAPEUR POURVU DE TUBE-FILTRE SPÉCIFIQUE DESTINÉ À LA FILTRATION DES PARTICULES DE CALCAIRE, AINSI QUE APPAREIL DE CUISSON À VAPEUR

(30) Priorität: 25.01.2021 EP 21290003
(43) Veröffentlichungstag der Anmeldung: 27.07.2022
(73) Patentinhaber: BSH Hausgeräte GmbH, 81739 München (DE)
(72) Erfinder: Albrecht, Arnaud, 67100 Strasbourg (FR); Chabut, Nicolas, 67140 Gertwiller (FR)

(56) Entgegenhaltungen:
- CN-A- 108 392 090
- CN-A- 113 576 272
- DE-A1- 10 234 625

## Beschreibung

Ein Aspekt der Erfindung betrifft einen Fluidverdampfer für ein Dampfgargerät. Der Fluidverdampfer weist ein Aufnahmebecken für das flüssige Fluid auf. Der Fluidverdampfer weist darüber hinaus eine Heizung zum Verdampfen des flüssigen Fluids in dem Aufnahmebecken auf. Darüber hinaus weist der Fluidverdampfer einen Filter auf, der in einem Aufnahmebecken angeordnet ist. Ein weiterer Aspekt der Erfindung betrifft ein Dampfgargerät mit einem Fluidverdampfer.

Dampfgargeräte sind in vielfältigen Ausgestaltungen bekannt. Sie weisen üblicherweise einen Zubereitungsraum beziehungsweise einen Garraum auf, in dem das Lebensmittel eingebracht und zubereitet werden kann. In diesem Garraum wird Dampf eingebracht beziehungsweise Dampf darin erzeugt, der auf das Lebensmittel zum Garen einwirkt. Das Dampfgargerät weist dazu einen Verdampfer beziehungsweise einen Fluidverdampfer auf. Flüssiges Fluid, wie Wasser, kann in einem Wasserreservoir bereitgestellt werden. Dieses Wasserreservoir kann ein Tank sein. Dieser ist fluidleitend mit dem Verdampfer verbunden. Es kann eine Pumpe dazwischengeschaltet sein. Damit wird das Wasser von dem Tank zum Verdampfer gefördert. Das Wasserreservoir kann auch ein Hauswassernetz sein, welches mit einer Leitung mit dem Verdampfer verbunden ist. Mit einem Ventil kann der Zulauf des Wassers zum Aufnahmebecken freigegeben oder gesperrt werden.

Ein derartiges Dampfgargerät ist beispielsweise aus der EP 1 702 542 A2 bekannt. Zur Filterung von Kalkpartikeln ist dort vorgesehen, dass in der Förderpumpe selbst ein Filter angeordnet ist. Der dortige Filter ist als Ring aufgebaut und relativ schwierig zugänglich in der Förderpumpe angeordnet. Es sind dort nur zwei kleine Filterfenster ausgebildet, die mit einem Maschengeflecht versehen sind. Sowohl die Filterwirkung als auch die Zugänglichkeit als auch die Handhabung des Filters ist schwierig.

Darüber hinaus ist aus der CN 208832428 U ein Verdampfer für ein Dampfgargerät bekannt. Dort ist in einem Behälter des Verdampfers an einem Boden eine Heizung ausgebildet, um flüssiges Fluid, das in dem Behälter angeordnet ist, zu verdampfen. Der Boden des Behälters weist eine Öffnung auf, durch welche das Fluid in den Behälter gelangen kann. In dem Behälter ist darüber hinaus ein Filter angeordnet. Dieser ist als plattenartiges Element ausgebildet. Es ist in etwa auf mittiger Höhe in dem Behälter angeordnet. Es erstreckt sich über die gesamte lichte Weite des Behälterinnenraums. Insbesondere ist es beabstandet zu der Öffnung im Boden angeordnet. Dieses Filter ist dazu vorgesehen, größere Wassertröpfchen, die nach dem Verdampfen noch vorhanden sind, auszufiltern. Dadurch soll diesbezüglich reduzierter Dampf über eine Öffnung aus dem Behälter ausgeleitet werden können. Ein derartiges Filter ist weder geeignet noch bestimmungsgemäß dazu vorgesehen, Kalkpartikel zu einem flüssigen Fluid auszufiltern. Aus der DE 102 34 625 A1 ist ein Dampferzeuger für ein Gargerät bekannt. Dieser weist Filter für Kalkpartikel auf. Des Weiteren sind aus der CN 108 392 090 A und der CN 113 576 272 A Dampferzeuger für Dampfgargeräte bekannt.

Es ist Aufgabe der vorliegenden Erfindung, einen Fluidverdampfer für ein Dampfgargerät bereitzustellen, mit welchem das Zulaufen und Ablaufen von Verunreinigungen in einem flüssigen Fluid verbessert vermieden ist.

Diese Aufgabe wird durch einen Fluidverdampfer und ein Dampfgargerät gemäß den unabhängigen Ansprüchen gelöst.

Ein Aspekt der Erfindung betrifft einen Fluidverdampfer für ein Dampfgerät gemäß Anspruch 1. Der Fluidverdampfer weist ein Aufnahmebecken für das flüssige Fluid auf. Darüber hinaus weist der Fluidverdampfer auch eine Heizung auf. Mit dieser Heizung wird das flüssige Fluid in dem Aufnahmebecken verdampft. Des Weiteren weist der Fluidverdampfer ein Filter auf. Das Filter ist in dem Aufnahmebecken angeordnet. Das Filter dieses Fluidverdampfers ist als Kalkpartikelfilter bestimmungsgemäß ausgebildet. Dieses Filter ist ein Filterrohr. Das Filterrohr weist Filteröffnungen auf, sodass bei einem Hindurchströmen des flüssigen Fluids durch das Filterrohr Kalkpartikel filterbar sind. Dies bedeutet auch, dass das Filterrohr bestimmungsgemäß so ausgebildet ist, dass Kalkpartikel aus dem flüssigen Fluid ausgefiltert werden. Durch den Fluidverdampfer ist es somit ermöglicht, dass insbesondere beim Zuströmen von flüssigem Fluid in das Aufnahmebecken Kalkpartikel ausgefiltert werden und somit nicht zum Aufnahmebecken gelangen. Andererseits ist es insbesondere ermöglicht, dass beim Auslaufen von flüssigem Fluid aus dem Aufnahmebecken Kalkpartikel, die sich beim Verdampfen von flüssigem Fluid in dem Aufnahmebecken gebildet haben, ebenfalls ausgefiltert werden können. Diese verbleiben dann in dem Aufnahmebecken beziehungsweise am Filterrohr. Gerade dies ist besonders vorteilhaft, da somit derartig gebildete Kalkpartikel beim Entleeren beziehungsweise Ablassen von flüssigem Fluid aus dem Aufnahmebecken nicht daraus entweichen können. Damit kann auch vermieden werden, dass ein Leitungssystem, das mit dem Aufnahmebecken gekoppelt ist, mit diesen Kalkpartikeln aus dem Aufnahmebecken beaufschlagt werden. Ein Verstopfen eines derartigen Leitungssystems und/oder eine Beeinträchtigung der Funktion von weiteren Komponenten, die in dem Leitungssystem strömungstechnisch verschaltet sind, kann dadurch vermieden werden. Es ist also mit der Idee ermöglicht, dass der Fluidverdampfer selbst mit einem spezifischen und im Aufnahmebecken selbst angeordneten Filter ein besonders effizientes Filtern von Kalkpartikeln ermöglicht. Gerade durch die spezifische Geometrie des Filters lässt sich ein kompakter Aufbau erreichen, der auch ein effizientes Filtern ermöglicht.

Das Filterrohr weist mehrere separate Schlitze auf. Derartige Schlitze sind besonders wirksam im Hinblick auf das Filtern von Kalkpartikeln. Denn sie sind einerseits entsprechend schmal, andererseits für die Geometrie als Schlitz entsprechend länglich und mit einer größeren Höhe im Vergleich zur Breite ausgebildet. Somit ist ein effizientes Filtern auch bei unterschiedlichen Wasserständen ermöglich. Da sich ein derartiger Schlitz über eine spezifische Höhe im Aufnahmebecken erstreckt, lässt sich somit das Zulaufen und Ablaufen des flüssigen Fluids uneingeschränkt erreichen und dennoch das effiziente Filtern von Kalkpartikeln auch bei unterschiedlichen Wasserständen im Aufnahmebecken erreichen.

Die mehreren Schlitze sind axial zur Längsachse des Filterrohrs orientiert. Dies bedeutet, dass sie in Höhenrichtung orientiert sind und somit parallel zur Längsachse verlaufen. Die Schlitze können in Umlaufrichtung um die Längsachse des Filterrohrs äquidistant zueinander ausgebildet sein. Es können zumindest zwei, insbesondere zumindest drei, insbesondere zumindest vier Schlitze sein. Die Schlitze können die gleiche axiale Länge aufweisen. Sie können in einem Ausführungsbeispiel alle auf gleicher axialer Lage ausgebildet sein. Dies bedeutet, dass ein unteres Ende eines Schlitzes und/oder ein oberes Ende eines Schlitzes für alle Schlitze auf gleicher axialer Höhenlage ausgebildet sind. In einem anderen Ausführungsbeispiel kann es vorgesehen sein, dass zumindest zwei Schlitze in unterschiedlicher Länge und/oder auf unterschiedlicher Höhenlage ausgebildet sind. Dadurch kann der Filterung auch bei sehr vielfältigen Wasserständen Genüge getan werden.

In einem Ausführungsbeispiel ist das Filterrohr stabförmig ausgebildet. Dies bedeutet, dass die Höhe beziehungsweise Länge des Rohrs größer ist, als ein Durchmesser. Insbesondere ist die Länge des Filterrohrs um ein Vielfaches größer, als der Durchmesser. Insbesondere ist die Länge um ein Fünffaches, insbesondere zumindest ein Zehnfaches, größer, als der Durchmesser des Filterrohrs. Dadurch wird quasi ein dünner, länglicher Körper als Filterrohr gebildet. Dieser kann sehr platzsparend in dem Aufnahmebecken angeordnet und verbaut werden.

In einem Ausführungsbeispiel weist das Aufnahmebecken einen Boden auf. In diesem Boden ist zumindest eine Zulauf- und/oder Ablauföffnung für das flüssige Fluid zum Aufnahmebecken beziehungsweise aus dem Aufnahmebecken ausgebildet. Das Filterrohr ist an dem Boden angeordnet. Es ist insbesondere im Bereich der Zulauf- und/oder Ablauföffnung angeordnet. Dadurch kann das flüssige Fluid beim Zulauf zum Aufnahmebecken unmittelbar durch das Filterrohr strömen. Dadurch werden gegebenenfalls unerwünschte Kalkpartikel bereits an der Zulauf- und/oder Ablauföffnung durch das Filterrohr ausgefiltert und gelangen nicht in das eigentliche Aufnahmebecken hinein. Insbesondere nicht in den Bereich des Aufnahmebeckens, in dem dann das flüssige Fluid vorhanden ist, welches verdampft werden soll. Besonders vorteilhaft ist durch das Filterrohr bei einem Abführen beziehungsweise beim Ablauf von flüssigem Fluid aus dem Aufnahmebecken eine entsprechende Filterung ermöglicht, wie dies bereits oben erläutert wurde. Damit können beim Verdampfen in dem Fluidverdampfer entstehende, größere Kalkpartikel, die sich dann in dem Aufnahmebecken sammeln, entsprechend ausgefiltert werden. Sie können somit zurückgehalten werden und können nicht über die Zulauf- und/oder Ablauföffnung aus dem Aufnahmebecken in das Leitungssystem gelangen.

Insbesondere ist in einem Ausführungsbeispiel vorgesehen, dass zumindest ein Schlitz mit seinem in Richtung der Längsachse unteren Ende bis zum Boden des Aufnahmebeckens reicht. Damit kann auch bei sehr niedrigen Wasserständen beziehungsweise bei sehr niedrigen Füllständen des flüssigen Fluids im Aufnahmebecken ein Zulauf und insbesondere auch ein Ablauf ermöglicht werden. Es ist dann ebenfalls eine Filterung von Kalkpartikeln ermöglicht.

In einem Ausführungsbeispiel ist das Filterrohr am oberen Ende offen ausgebildet. Dies ist ein weiteres vorteilhaftes Ausführungsbeispiel, denn dann kann insbesondere bei einem Befüllvorgang beziehungsweise einem Zulauf von flüssigem Fluid zum Aufnahmebecken das flüssige Fluid nicht nur durch die Schlitze in das Aufnahmebecken gelangen, sondern auch durch diese obere randseitige Öffnung des Filterrohrs. In einem Ausführungsbeispiel ist diese obere Öffnung so dimensioniert, dass ebenfalls das Filtern der Kalkpartikel erreicht ist. Insbesondere kann somit die Öffnung so dimensioniert sein, dass sie der Breite eines Schlitzes entspricht. In dem Zusammenhang können an diesem oberen Ende des Filterrohrs auch mehrere kleinere Öffnungen ausgebildet sein. Möglich ist auch, dass diese endseitige Öffnung des Filterrohrs größer ist.

In einem Ausführungsbeispiel weist zumindest ein Schlitz eine Breite zwischen 1,7 mm und 2,2 mm auf. Dies ist ein besonders vorteilhaftes Werteintervall. Denn dadurch können die größeren Kalkpartikel, die insbesondere beim Verdampfen von flüssigem Fluid in dem Aufnahmebecken entstehen können und zurückbleiben, vor einem Ablaufen aus dem Aufnahmebecken effizient ausgefiltert werden. Gerade derartig größere Kalkpartikel können zu unerwünschten Beeinträchtigungen des Leitungssystems und Funktionskomponenten, die in dem Leitungssystem verschaltet sind, führen. Insbesondere kann somit ein Verstopfen der Leitungen und das Beeinträchtigen von Ventilen in dem Leitungssystem vermieden werden.

Darüber hinaus ist durch diese Breitendimensionierung der Schlitze jedoch auch eine Größe erreicht, sodass ein effizientes Füllen des Aufnahmebeckens mit flüssigem Fluid als auch ein effizientes Ablaufen von flüssigem Fluid aus dem Aufnahmebecken erreicht ist. Es kann somit auch ein hinreichend schnelles Befüllen und ein hinreichend schnelles Abführen von flüssigem Fluid ermöglicht werden.

In einem vorteilhaften Ausführungsbeispiel ist es möglich, dass zumindest zwei Schlitze unterschiedliche Breiten aufweisen. Durch eine derartige unterschiedliche Breitendimensionierung können unterschiedlich große Kalkpartikel mit einem einzigen Filterrohr ausgefiltert werden. Somit ist es möglich, dass beispielsweise zumindest ein Schlitz eine Breite zwischen 0,3 mm und 0,7 mm aufweist. Ein zumindest weiterer Schlitz kann beispielsweise eine Breite zwischen größer 0,7 mm und kleiner 1,7 mm aufweisen. Zumindest ein weiterer Schlitz kann eine Breite zwischen 1,7 mm und 2,2 mm aufweisen. Möglich ist es, dass bei einem Ausführungsbeispiel zumindest zwei Schlitze mit unterschiedlicher Breite an dem Filterrohr ausgebildet sind. Es können jedoch auch mehr als zwei Schlitze, die jeweils im Vergleich zueinander unterschiedliche Breiten aufweisen, am Filterrohr ausgebildet sein. Damit können noch effizientere Filtervorgänge bezüglich unterschiedlich großer Kalkpartikel durchgeführt werden.

Diese Schlitze sind insbesondere an einer Rohrwand beziehungsweise einer Mantelwand des Filterrohrs ausgebildet. Die Mantelwand kann glatt sein. Sie kann aber auch zumindest eine Einbuchtung aufweisen. Beispielsweise kann sie radial weiter innen liegende, axiale Rinnen aufweisen. In einem Rinnenboden kann ein Schlitz ausgebildet sein. Dadurch ist der Schlitz versenkt beziehungsweise radial nach innen versetzt in der Mantelwand angeordnet.

Allgemein können zusätzlich zu einem Schlitz auch noch andere Filteröffnungen an der Mantelwand ausgebildet sein. Beispielsweise runde oder ovale oder eckige Löcher.

In einem Ausführungsbeispiel weist das Filterrohr eine Länge auf, die größer ist als eine Höhe zwischen der Innenseite des Bodens des Aufnahmebeckens und einem oberen, maximalen Füllstandrand des Aufnahmebeckens. Dieses Ausführungsbeispiel ermöglicht es, auch bei sehr hohen Wasserständen im Aufnahmebecken quasi über die gesamte Höhe dieses Wasserstands Schlitze bereitstellen zu können. Dadurch wird auch bei größeren Wasserständen einerseits ein sehr vorteilhaftes Filtern von Kalkpartikeln ermöglicht, andererseits das Strömen von Fluid aus oder in das Aufnahmebecken auch zeitlich effizient ermöglicht. Nicht zuletzt ist dieses Ausführungsbeispiel dann vorteilhaft, wenn das Filterrohr an seinem oberen Ende eine größere Filteröffnung, insbesondere größer als eine Schlitzbreite, aufweist. Dadurch kann nämlich dann vermieden werden, dass sich über dieses obere Ende unerwünscht Kalkpartikel aus dem Aufnahmebecken, insbesondere größere Kalkpartikel, über das Filterrohr in das Leitungssystem bewegen könnten. Indem sich nämlich genau dieses obere Ende mit der gegebenenfalls größeren endseitigen Öffnung über den oberen Füllstandrand des Aufnahmebeckens hinaus erstreckt, kann unter keinen Umständen flüssiges Fluid und somit insbesondere Wasser über diese obere Öffnung in das Innere des Filterrohrs gelangen und von dort dann aus dem Aufnahmebecken ausströmen. Da es beispielsweise bei der Herstellung eines Filterrohrs als Spritzgussteil zu derartigen Ausgestaltungen mit einer größeren Öffnung an dem oberen Ende des Filterrohrs kommen kann, ist dann durch diese entsprechende Längendimensionierung des Filterrohrs das Ablaufen von größeren Kalkpartikeln aus dem Aufnahmebecken wieder vermieden. Insbesondere bei der Herstellung als Spritzgussteil kann ein derartiges Filterrohr besonders kostengünstig realisiert werden, insbesondere, wenn es an diesem oberen Ende eine einfache Endgeometrie aufweist.

In einem Ausführungsbeispiel weist das Filterrohr einen ersten Rohrabschnitt auf. Dieser erste Rohrabschnitt erstreckt sich, im an dem Aufnahmebecken angeordneten Zustand, vom Boden des Aufnahmebeckens nach oben. Insbesondere erstreckt sich der erste Rohrabschnitt in einem Ausführungsbeispiel über den oberen Füllstnadrand des Aufnahmebeckens nach außen und somit nach oben über das Aufnahmebecken überstehend hinaus. Somit erstreckt sich dieser erste Rohrabschnitt nach außen aus dem Aufnahmebecken hinaus. Dies ist insbesondere dann der Fall, wenn das Filterrohr so ausgebildet ist, wie es im vorhergehenden Absatz erläutert wurde.

In einem Ausführungsbeispiel weist das Filterrohr einen zweiten Rohrabschnitt auf, der sich in die rohrartig ausgebildete Zulauf- und/oder Ablauföffnung hinein erstreckt. Dadurch kann das Filterrohr mechanisch besonders stabil an der Zulauf- und/oder Ablauföffnung befestigt werden. Es ist dann auch eine relativ einfache Befestigungsmöglichkeit erreicht. Insbesondere erstreckt sich der zweite Rohrabschnitt über die gesamte Länge beziehungsweise die gesamte Höhe dieser Zulauf- und/oder Ablauföffnung. Dadurch ist eine besonders stabile Befestigung des insbesondere vertikal stehenden Filterrohrs erreicht.

Insbesondere ist dies dann vorteilhaft, wenn die Zulauf- und/oder Ablauföffnung als Stutzen beziehungsweise ebenfalls rohrartig ausgebildet ist. Dann erstreckt sich die Zulauf- und/oder Ablauföffnung von dem Boden des Aufnahmebeckens nach unten. Dieser Stutzen ist insbesondere einstückig mit dem Boden des Aufnahmebeckens ausgebildet. Durch einen solchen Stutzten kann eine stabilere und fixiertere Befestigung eines separaten Filterrohrs erreicht werden. In einem Ausführungsbeispiel ist das Aufnahmebecken einstückig ausgebildet. Es kann aus Kunststoff oder Metall ausgebildet sein. Möglich ist auch eine Ausführung aus Keramik oder Glas.

In einem Ausführungsbeispiel ist das Filterrohr an dem dazu separaten Boden zerstörungsfrei lösbar befestigt. Bei einem derartigen Ausführungsbeispiel ist somit das Filterrohr eine zum Aufnahmebecken separate Komponente. Dadurch kann herstellungstechnisch und materialtechnisch individuell auf die einzelnen Komponenten besser eingegangen werden. Sowohl die gegebenenfalls erforderliche Fertigbarkeit als auch die Funktionalität dieser Einzelkomponenten können dann individuell besser gestaltet werden. Durch eine zerstörungsfrei lösbare mechanische Verbindung kann das Filterrohr gegebenenfalls auch reversibel entnommen und wieder eingesetzt werden. Damit kann beispielsweise bei einem Verschleiß des Filterrohrs dieses jederzeit ausgetauscht werden, ohne das Gesamtmodul aus Filterrohr und Aufnahmebecken ersetzen zu müssen.

In einem Ausführungsbeispiel ist das Filterrohr an der Zulauf- und/oder Ablauföffnung durch eine Schnappverbindung befestigt. Dies ist ebenfalls ein sehr vorteilhaftes Beispiel. Denn dadurch kann eine einfache und schnelle Montage erreicht werden. Andererseits ist dann auch das Demontieren einfach ermöglicht. Nicht zuletzt ist eine Schnappverbindung jedoch auch eine sehr stabile und robuste mechanische Verbindung. Dies ermöglicht ein sehr exaktes und fixiertes Anordnen des Filterrohrs an dem Boden.

In einem Ausführungsbeispiel ist vorgesehen, dass Schnappelemente an dem Filterrohr ausgebildet sind. Insbesondere sind sie einstückig damit ausgebildet. Es kann vorgesehen sein, dass mehrere Schnappelemente an dem Filterrohr ausgebildet sind. Beispielsweise können derartige Schnappelemente an einem unteren Ende des Filterrohrs ausgebildet sein. Sie können als radial abstehende Elemente ausgebildet sein. Sie können als starre Elemente ausgebildet sein. Möglich ist es auch, dass sie als radial verformbare und/oder radial federnde Schnappelemente ausgebildet sind.

In einem weiteren Ausführungsbeispiel kann das Filterrohr weitere Schnappelemente aufweisen. Diese können in Richtung der Längsachse des Filterrohrs beabstandet zum oberen und zum unteren Ende ausgebildet sein. Sie können ebenfalls an der Mantelwand des Filterrohrs ausgebildet sein. Sie können diesbezüglich radial abstehend nach außen orientiert sein. Insbesondere können diese Schnappelemente in radialer Richtung elastisch verformbar und/oder radial federnd ausgebildet sein. Durch derartige Ausgestaltungen kann auch ein axial stabiler Sitz des Filterrohrs an dem Boden erreicht werden. Auch eine einfache Montage des Filterrohrs, insbesondere an einem Stutzen, ist dadurch erreicht. Es kann nämlich bei dem Ausführungsbeispiel, bei welchem sowohl an einem unteren Ende des Filterrohrs Schnappelemente als auch in axialer Richtung demgegenüber nach oben hin versetzt weiteren Schnappelementen ausgebildet sind, ein sehr passgenauer Sitz des Filterrohrs an der Zulauf- und/oder Ablauföffnung erreicht werden. Denn einerseits kann somit das Filterrohr dann mit einer unteren Kante beziehungsweise einem unteren Rand der Zulauf- und/oder Ablauföffnung verschnappen als auch am oberen Ende der Zulauf- und/oder Ablauföffnung, die gleichzeitig auch durch die Innenseite des Bodens gebildet wird, verschnappen. Ein axial fester Sitz des Filterrohrs ist dadurch ermöglicht. Durch die radiale Verformbarkeit und/oder radiale elastische federnde Anordnung von Schnappelementen kann das Einführen des Filterrohrs in die Zulauf- und/oder Ablauföffnung einfach erfolgen und auch das Hindurchschieben ermöglicht werden. Denn dann werden zumindest die hindurchgeführten Schnappelemente radial zusammengepresst und/oder radial nach innen gedrückt und beim Wiederherausführen aus der Zulauf- und/oder Ablauföffnung radial nach außen verformen und/oder radial nach außen federn und sie können dann somit automatisch verschnappen.

Möglich ist es in dem Zusammenhang auch, dass die Mantelwand des Filterrohrs eine Wandlamelle aufweist, die in Umlaufrichtung der Längsachse quasi als Freischnitt gebildet ist. In Umlaufrichtung an den gegenüberliegenden Enden dieser Lamelle kann in einem Ausführungsbeispiel jeweils ein Schlitz ausgebildet sein. Darüber hinaus kann am unteren Ende der Lamelle ebenfalls ein kleiner Freiraum zu dem restlichen Wandbereich der Mantelwand gebildet sein. Dadurch wird quasi eine radial federnde und frei kragende Lamelle in dieser Mantelwand integriert gebildet. An dieser Lamelle kann zumindest ein Schnappelement des Filterrohrs einstückig ausgebildet sein. Damit ist ein Beispiel realisiert, wie ein derartiges radial federndes Schnappelement ausgebildet werden kann. In dem Zusammenhang können auch mehrere derartige Lamellenstreifen in der Mantelwand des Filterrohrs ausgebildet sein.

In einem Ausführungsbeispiel ist der zweite Rohrabschnitt des oberen Schnappelements nur am Boden anliegend angeordnet. Mit in Höhenrichtung beziehungsweise entlang der Längsachse des Filterrohrs betrachtet unteren Schnappelementen ist der zweite Rohrabschnitt mit einer Unterkante beziehungsweise einem unteren Rand der rohrartigen Zulauf- und/oder Ablauföffnung verschnappt. Insbesondere hinterschnappen diese unteren Schnappelemente die Unterkante dieser rohrartigen Zulauf- und/oder Ablauföffnung.

In einem Ausführungsbeispiel sind das Filterrohr und das Aufnahmebecken unlösbar verbunden. Beispielsweise kann hier eine Schweißverbindung oder eine Klebeverbindung vorgesehen sein. Bei einem derartigen Ausführungsbeispiel können das Filterrohr und das Aufnahmebecken auch aus einem gleichen Material ausgebildet sein. Dies ist jedoch auch dann möglich, wenn das Filterrohr und das separate Aufnahmebecken durch eine zerstörungsfrei lösbare Verbindung gekoppelt sind. Das Filterrohr ist in einem Ausführungsbeispiel einstückig ausgebildet. Dadurch kann es beispielsweise als Kunststoffteil einfach realisiert werden. Insbesondere kann es in dem Zusammenhang als Spritzgussbauteil realisiert sein. Das Filterrohr ist in einem Ausführungsbeispiel jedoch auch aus Metall möglich. Beispielsweise kann es aus Edelstahl sein. Bei einem derartigen Ausführungsbeispiel kann zunächst eine entsprechende Metallplatte bereitgestellt werden. In diese können dann die entsprechenden Schlitze eingearbeitet werden. Zusätzlich oder anstatt dazu können bei einem derartigen Ausführungsbeispiel als Filteröffnungen auch anderweitige Geometrien realisiert sein. Beispielsweise können hier Kreisöffnungen oder ovale Öffnungen an der Mantelwand des Filterrohrs ausgebildet sein. Eine derartige Platte kann dann im Nachgang in einem Ausführungsbeispiel zu einem stabförmigen Rohr geformt beziehungsweise zusammengerollt werden.

Durch einen Fluidverdampfer gemäß dem oben genannten Aspekt oder einem vorteilhaften Ausführungsbeispiel davon verbleiben im Aufnahmebecken weniger Kalkreste. Dadurch verringert beziehungsweise verlangsamt sich die vollständige Verkalkung und es verlängert sich die Autonomie des Dampfgargeräts zwischen zwei Entkalkungsvorgängen. In einem Ausführungsbeispiel kann das Filterrohr aus einem anhaftungsabweisenden Material ausgebildet sein. Beispielsweise kann dies ein spezifischer Kunststoff sein. Diesbezüglich kann der Kunststoff beispielsweise PTFE (Polytetrafluorethylen) sein. Darüber hinaus kann durch ein derartiges spezifisches Filter in dem Aufnahmebecken selbst das Befüllen und Entleeren quasi immer gleich ablaufen, unabhängig von dem Verkalkungszustand. Darüber hinaus kann eine Spaltkorrosion vermieden werden, insbesondere dann, wenn das Filterrohr aus Kunststoff ist.

In einem Ausführungsbeispiel weisen die Schlitze eine axiale Höhe beziehungsweise eine axiale Länge zwischen 30 mm und 40 mm auf. Insbesondere weisen sie eine diesbezügliche Länge zwischen 34 mm und 36 mm auf.

In einem Ausführungsbeispiel ist das Filterrohr, insbesondere ein erster oberer Rohrabschnitt, so dimensioniert, dass ein über den oberen Füllstandrand des Aufnahmebeckens hinausragendes Teilstück des Filterrohrs einen diesbezüglichen Überstand zwischen 8 mm und 15 mm, insbesondere zwischen 8 mm und 12 mm, aufweist.

Ein weiterer Aspekt der Erfindung betrifft ein Dampfgargerät. Dieses weist einen Fluidverdampfer gemäß dem oben genannten Aspekt oder einem vorteilhaften Ausführungsbeispiel davon auf.

Vorteilhafte Ausführungsbeispiele des oben genannten Aspekts sind als vorteilhafte Ausführungsbeispiele des weiteren unabhängigen Aspekts anzusehen.

Mit den Angaben "oben", "unten", "vorne", "hinten, "horizontal", "vertikal", "Tiefenrichtung", "Breitenrichtung", "Höhenrichtung" sind die bei bestimmungsgemäßen Gebrauch und bestimmungsgemäßen Positionieren des Fluidverdampfers beziehungsweise des Geräts gegebenen Positionen und Orientierungen angegeben.

Weitere Merkmale der Erfindung ergeben sich aus den Ansprüchen, den Figuren und der Figurenbeschreibung, wobei die Erfindung durch die Ansprüche definiert ist.

Ausführungsbeispiele der Erfindung werden nachfolgend anhand schematischer Zeichnungen näher erläutert. Es zeigen:
- Fig. 1: eine schematische Darstellung eines Ausführungsbeispiels eines Dampfgargeräts in Teilkomponenten;
- Fig. 2: eine schematische Darstellung von Teilkomponenten eines Ausführungsbeispiels eines Fluidverdampfers;
- Fig. 3: eine perspektivische Darstellung des Teilbereichs der Komponenten in Fig. 2 mit einem zusätzlich verbauten Filterrohr als Kalkpartikelfilter;
- Fig. 4: die Darstellung gemäß Fig. 3 in einer dazu unterschiedlichen Perspektive; und
- Fig. 5: eine Seitenansicht eines Ausführungsbeispiels eines Filterrohrs des Fluidverdampfers.

In den Figuren werden gleiche oder funktionsgleiche Elemente mit den gleichen Bezugszeichen versehen.

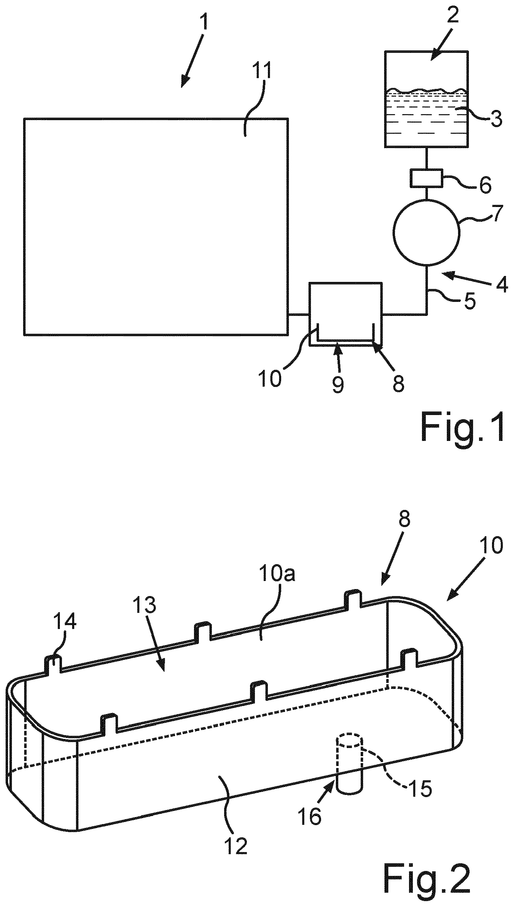

In Fig. 1 ist in einer sehr schematischen Darstellung ein Ausführungsbeispiel eines Dampfgargeräts 1 gezeigt. Es sind hier einige der Komponenten des Dampfgargeräts 1 dargestellt. Das Dampfgargerät 1 weist ein Wasserreservoir 2 auf. Dieses Wasserreservoir 2 kann ein eigener Tank beziehungsweise Behälter sein. Er kann in einem Gehäuse des Dampfgargeräts 1 angeordnet sein. Das Wasserreservoir 2 kann aber auch ein Hauswassernetz oder dergleichen sein. In dem Wasserreservoir 2 ist flüssiges Fluid 3, insbesondere Wasser. Darüber hinaus weist das Dampfgargerät 1 ein Leitungssystem 4 auf. Das Leitungssystem 4 ist mit dem Wasserreservoir 2 strömungstechnisch verbunden. Das Leitungssystem 4 kann zumindest eine Leitung 5 aufweisen. Es weist in einem Ausführungsbeispiel auch zumindest ein Ventil 6 und eine Pumpe 7 auf. Darüber hinaus weist das Dampfgargerät 1 einen Verdampfer beziehungsweise einen Fluidverdampfer 8 auf. Der Fluidverdampfer 8 ist strömungstechnisch mit dem Leitungssystem 4 verbunden. Der Fluidverdampfer 8 ist eine zum Wasserreservoir 2 separate Komponente. Flüssiges Fluid 3 des Wasserreservoirs 2 kann mit dem Leitungssystem 4 zum Fluidverdampfer 8 gefördert werden. Andererseits kann flüssiges Fluid, welches sich in dem Fluidverdampfer 8 befindet, mit dem Leitungssystem 4 zum Wasserreservoir 2 zurückgefördert werden.

Der Fluidverdampfer 8 weist eine Heizung 9 auf. Mit dieser kann das flüssige Fluid in einem Aufnahmebecken 10 des Fluidverdampfers 8 verdampft werden. Das Aufnahmebecken 10 ist Bestandteil des Fluidverdampfers 8. Wie darüber hinaus in Fig. 1 zu erkennen ist, weist das Dampfgargerät 1 einen Zubereitungsraum beziehungsweise einen Garraum 11 auf. In diesen können Lebensmittel bestimmungsgemäß eingebracht werden, um darin zubereitet zu werden. Diesbezüglich kann Dampf, der mit dem Fluidverdampfer 8 erzeugt wird, in den Garraum 11 eingeleitet werden.

In Fig. 2 ist in einer perspektivischen schematischen Darstellung ein Ausführungsbeispiel eines Aufnahmebeckens 10 des Fluidverdampfers 8 gezeigt. Das Aufnahmebecken 10 ist als Schale ausgebildet. Es weist eine Seitenwand 10a und einen Boden 12 auf. Dadurch ist ein Aufnahmevolumen 13 für das flüssige Fluid 3 gebildet. Im Ausführungsbeispiel sind schematisch noch Verbindungselemente 14, insbesondere Schnappelemente, gezeigt. Diese sind für eine zerstörungsfrei lösbare Verbindung mit einem in Fig. 2 nicht gezeigten Deckel beziehungsweise einer oberen Abdeckung des Fluidverdampfers 8. Dieser separate Deckel wird insbesondere auf diesem Aufnahmebecken 10 verschnappt.

Der Boden 12 des Aufnahmebeckens 10 weist eine Zulauf- und/oder Ablauföffnung 15 auf. Durch diese kann das flüssige Fluid 3 von dem Leitungssystem 4 in das Volumen 13 einströmen. Andererseits kann auch flüssiges Fluid 3 aus dem Volumen 13 über diese Zulauf- und/oder Ablauföffnung 15 aus dem Aufnahmebecken 10 heraus in das Leitungssystem 4 strömen.

Im Ausführungsbeispiel ist die Zulauf- und/oder Ablauföffnung 15 als rohrartige Öffnung ausgebildet. Sie kann somit auch als Stutzen 16 gebildet sein beziehungsweise entsprechend bezeichnet werden. Dieser Stutzen 16 erstreckt sich von dem Boden 12 nach unten.

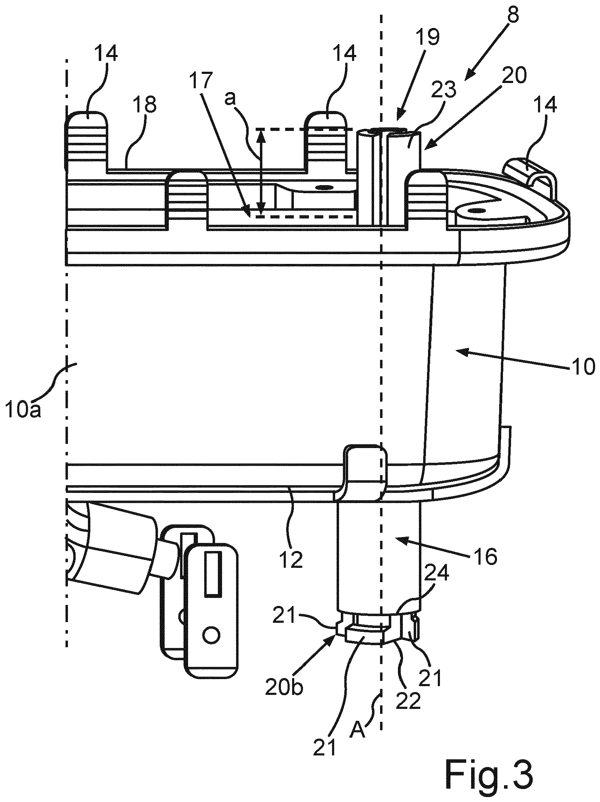

In Fig. 3 ist in einer perspektivischen Darstellung ein Teilbereich des Aufnahmebeckens 10 gezeigt. Das Aufnahmebecken 10 weist an seiner Seitenwand 10a einen oberen, maximalen Füllstandrand 17 auf. Dieser obere Füllstandrand 17 bezeichnet hier auch gleichzeitig den maximalen Füllstand, der für das flüssige Fluid 3 im Aufnahmebecken 10 erreicht werden kann. Dieser obere Füllstandrand 17 ist hier tieferliegend als eine obere Kante 18 der Seitenwand 10a. Die obere Kante 18 ist der tatsächliche obere mechanische beziehungsweise konturelle Abschluss der Seitenwand 10a.

Der Fluidverdampfer 8 weist ein Filter 19 auf. Das Filter 19 ist Bestandteil des Fluidverdampfers 8. Das Filter 19 ist in dem Aufnahmebecken 10 angeordnet. Es erstreckt sich somit auch innerhalb des Volumens 13. Das Filter 19 ist als Kalkpartikelfilter ausgebildet. Somit sind beziehungsweise werden bestimmungsgemäß Kalkpartikel, die im Fluidverdampfer 8 selbst entstehen, gefiltert. Auch Kalkpartikel, die über das Leitungssystem 4 zum Fluidverdampfer 8 geleitet werden, können ausgefiltert werden. Dadurch gelangen diese nicht in das Volumen 13. Besonders vorteilhaft ist dieses Filter 19 dahingehend, dass größere Kalkpartikel, die im Fluidverdampfer 8 beim Verdampfen des flüssigen Fluids entstehen, nicht aus dem Volumen 13 austreten und in das Leitungssystem 4 gelangen können.

Das Filter 19 ist als Filterrohr 20 ausgebildet. Es ist hier als stabförmiges dünnes Filter ausgebildet. Das Filterrohr 20 weist eine Längsachse A auf. Wie in Fig. 3 zu erkennen ist, ist das Filterrohr 20 direkt am Boden 12, insbesondere im Bereich der Zulauf- und/oder Ablauföffnung 15, angeordnet. Es steht von dem Boden 12 vertikal nach oben.

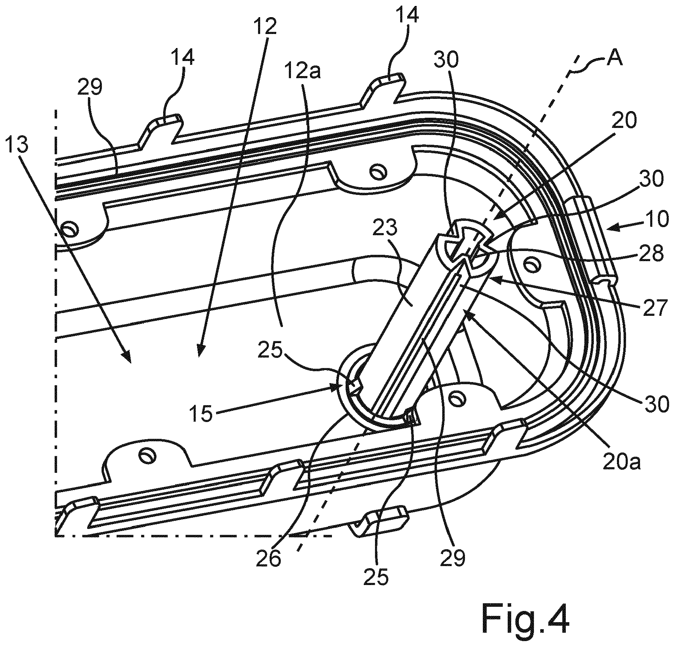

In einem Ausführungsbeispiel ist das Filterrohr 20 eine einstückige Komponente. Sie ist insbesondere als separate Komponente zu dem Aufnahmebecken 10 ausgebildet. Bei einem derartigen Ausführungsbeispiel ist das Filterrohr 20 vorzugsweise durch eine zerstörungsfrei lösbare mechanische Verbindung an dem Boden 12, insbesondere der Zulauf- und/oder Ablauföffnung 15 und hier somit dem Stutzten 16, befestigt. Beispielsweise kann hier eine Schnappverbindung vorgesehen sein. Diese Schnappverbindung kann in einem Ausführungsbeispiel durch Schnappelemente 21, wie sie in Fig. 3 zu erkennen sind, gebildet sein. Diese Schnappelemente 21 sind an einem unteren Ende 22 des Filterrohrs 20 ausgebildet. Sie stehen radial von einer Mantelwand 23 des Filterrohrs 20 weg. Durch diese Schnappelemente 22 kann eine Schnappverbindung mit einer Unterkante 24 des Stutzens 16 erreicht werden. In einem Ausführungsbeispiel kann das Filterrohr 20 zusätzliche Schnappelemente 25 (Fig. 4) aufweisen. Diese sind ebenfalls an der Mantelwand 23 des Filterrohrs 20 ausgebildet. Sie stehen ebenfalls radial nach außen. Wie in der perspektivischen Darstellung in Fig. 4, bei welcher in das Innere des Volumens 13 des Aufnahmebeckens 10 geblickt wird, zu erkennen ist, sind diese axial oberen Schnappelemente 25 in einem Ausführungsbeispiel an einer Innenseite 12a des Bodens 12 verschnappt. Sie sind somit an einem oberen Ende beziehungsweise an einer oberen Kante 26 des Stutzens 16 verschnappt. Durch ein derartiges Ausführungsbeispiel ist auch eine axial gesicherte Lage des Filterrohrs 20 ermöglicht. Es kann vorgesehen sein, dass die Schnappelemente 21 und/oder die Schnappelemente 25 senkrecht zur Längsachse A und somit radial elastisch verformbar und/oder in dieser radialen Richtung federnd angeordnet sind. Dadurch ist auch ein einfaches Hindurchführen beziehungsweise Hindurchstecken des Filterrohrs 20 durch die Zulauf- und/oder Ablauföffnung 15 beziehungsweise durch den Stutzen 16 ermöglicht. Beispielsweise kann bei einem derartigen Ausführungsbeispiel das Filterrohr 20 mit einem oberen Ende 27 durch das untere Ende des Stutzens 16 in den Stutzen 16 eingeführt werden und so weit nach oben geschoben werden, bis der in Fig. 3 und Fig. 4 gezeigte Endzustand beziehungsweise die Endposition erreicht ist. In dieser ist dann auch der verschnappte Zustand ausgebildet.

Wie darüber hinaus in Fig. 3 zu erkennen ist, ist in einem Ausführungsbeispiel das Filterrohr 20 mit einer Länge beziehungsweise Höhe ausgebildet, die das Filterrohr 20 über den oberen Rand 17 nach oben hinausragen lässt. Insbesondere ist dies, wie in Fig. 3 zu erkennen ist, mit einem Überstand a realisiert, der zwischen 8 mm und 12 mm beträgt. Insbesondere ist dies dann der Fall, wenn an einem oberen Ende 27 des Filterrohrs 20 eine im Vergleich zu einer azimutalen Breite eines Schlitzes zur Kalkpartikelfilterung in der Mantelwand 23 entsprechend größere endseitige Filteröffnung 28 ausgebildet ist, wie dies in Fig. 4 zu erkennen ist. Über eine derartige größere Filteröffnung 28 kann beim Befüllen des Aufnahmebeckens 10 das flüssige Fluid 3 auch über diese Filteröffnung 28 in das Aufnahmevolumen 13 gelangen.

In Fig. 3 und Fig. 4 ist darüber hinaus auch eine Dichtung 29 zu erkennen. Auf dieser Dichtung 29 ist dann der nicht gezeigte Deckel des Fluidverdampfers 8 aufsitzend. Dadurch ist die Schnittstelle zwischen dem Deckel und dem Aufnahmebecken 10 dichtend ausgebildet.

In einem Ausführungsbeispiel, in dem die größer dimensionierte Filteröffnung 28 am oberen Ende 27 des Filterrohrs 20 auch kleiner oder gleich einer Breite eines zum Filtern von Kalkpartikel bestimmungsgemäß vorgesehenen Schlitzes in der Mantelwand 23 dimensioniert ist, kann dieser Überstand a auch nicht ausgebildet sein. Dann kann das Filterrohr 20 auch kürzer realisiert sein und beispielsweise an dem oberen Füllstandrand 17 oder auch darunter enden.

In einem Ausführungsbeispiel weist das Filterrohr 20 einen ersten Rohrabschnitt 20a auf, wie er in Fig. 3 und Fig. 4 zu erkennen ist. Dieser erste Rohrabschnitt 20a ist derjenige, der sich in dem Volumen 13 erstreckt. Es ist also derjenige Rohrabschnitt, der vom Boden 12 nach oben ragt. Das Filterrohr 20 weist darüber hinaus in einem Ausführungsbeispiel einen zweiten Rohrabschnitt 20b (Fig. 3) auf. Dies ist derjenige Rohrabschnitt, der nach unten an den ersten Rohrabschnitt 20a direkt anschließt und welcher sich in dem Stutzen 16 erstreckt. Insbesondere sind an diesem zweiten Rohrabschnitt 20b die Schnappelemente 21 und/oder 25 ausgebildet.

Allgemein betrachtet ist das Filterrohr 20 in den Stutzen 16 eingeführt. Dadurch kann es auch sehr stabil gehalten werden.

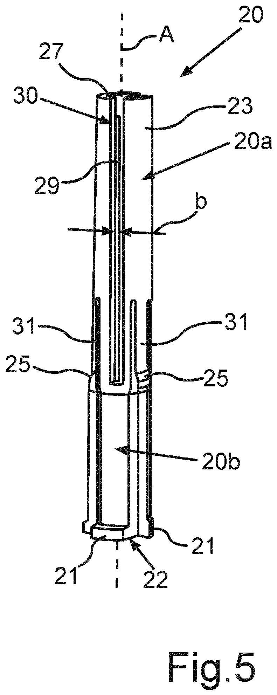

Das Filterrohr 20 weist, wie es in der Ansicht in Fig. 5 gezeigt ist, in der Mantelwand 23 mehrere, Schlitze 29 auf, wobei die Schlitze 29 axial zur Längsachse des Filterrohrs 20 orientiert sind.

Diese Schlitze 29 sind zum Filtern von Kalkpartikel ausgebildet und vorgesehen. Der Schlitz 29, wie er in Fig. 5 zu erkennen ist, weist eine azimutale Breite b auf, die in einem Ausführungsbeispiel zwischen 1,7 mm und 2,2 mm beträgt. Es kann vorgesehen sein, dass die mehreren separaten Schlitze 29 allesamt die gleiche Breite b aufweisen. Möglich ist es jedoch auch, dass zumindest ein Schlitz 29 von den mehreren Schlitzen 29 eine diesbezüglich unterschiedliche Breite b aufweist. Möglich ist es auch, dass ein Schlitz 29 eine Breite b zwischen 0,3 mm und 0,7 mm aufweist. Zusätzlich oder anstatt dazu kann ein weiterer Schlitz 29 eine Breite b zwischen größer 0,7 mm und kleiner 1,7 mm aufweisen. Zusätzlich oder anstatt dazu kann ein weiterer Schlitz 29 vorhanden sein, der eine Breite b zwischen 1,7 mm und 2,2 mm aufweist. Wie zu erkennen ist, sind die Schlitze 29 axial orientiert. Es kann vorgesehen sein, dass die mehreren Schlitze 29 die gleiche axiale Länge aufweisen. Die mehreren Schlitze 29 können im Ausführungsbeispiel alle auf gleicher axialer Lage angeordnet sein. Sie können jedoch auch auf unterschiedlicher axialer Lage angeordnet sein und/oder unterschiedliche axiale Längen aufweisen. Diesbezüglich kann dies bei mehreren Schlitzen 29 jeweils bei zumindest einen der Schlitze 29 im Vergleich zu den anderen Schlitzen 29 der Fall sein. Wie darüber hinaus zu erkennen ist, weisen die Schlitze 29 vorzugsweise eine axiale Länge beziehungsweise axiale Höhe zwischen 30 mm und 40 mm auf. Vorzugsweise erstrecken sie sich nur in dem oberen Rohrabschnitt 20a. Sie enden daher vorzugsweise auf axialer Lage der vorzugsweise vorhandenen oberen Schnappelemente 25.

Wie in der Darstellung in Fig. 4 zu erkennen ist, ist die Querschnittgeometrie des Filterrohrs 20, insbesondere im ersten Rohrabschnitt 20a, hier mit mehreren, hier mit drei hohlen Radialsegmenten ausgebildet. Diese drei Radialsegmente sind mit dazwischenliegenden Rinnen 30 verbunden, die radial weiter innen liegen. In diesen radial weiter innen liegenden Rinnen 30 der Mantelwand 23 sind diese Schlitze 29 ausgebildet. Insbesondere sind die Schlitze 29 jeweils an einem radial am Weitesten innen liegenden Rinnenboden einer Rinne 30 ausgebildet.

Wie darüber hinaus in Fig. 5 zu erkennen ist, sind insbesondere in diesem Ausführungsbeispiel die oberen Schnappelemente 25 radial federnd und/oder radial elastisch verformbar ausgebildet. Dazu ist hier ein Lamellenstreifen 31 in der Mantelwand 23 ausgebildet. Dieser ist radial federnd realisiert. An einem axial unteren Ende dieser Federlasche beziehungsweise dieses Lamellenstreifens 31 ist das Schnappelement 25 ausgebildet.

Möglich ist es auch, dass in einem anderen Ausführungsbeispiel die Geometrie der Mantelwand 23 des Filterrohrs 20 anders realisiert ist und nicht diese drei radialen Segmente mit den dazwischenliegenden Rinnen 30 ausgebildet ist. Es kann dann auch vorgesehen sein, dass zwei in Umlaufrichtung der Längsachse A aufeinanderfolgende Schlitze 29 Begrenzungsfreiräume eines derartigen Lamellenstreifens 31 sind. Es kann dann vorgesehen sein, dass diese Schlitze 29 am unteren Ende des Lamellenstreifens 31 durch eine weitere Aussparung in der Mantelwand 23 verbunden sind, sodass eine diesbezügliche Lamelle, die azimutal gegenüberliegend durch zwei Schlitze 29 begrenzt ist, an diesem unteren Ende frei liegt und somit radial federn kann.

### Bezugszeichenliste

- 1: Dampfgargerät
- 2: Wasserreservoir
- 3: Fluid
- 4: Leitungssystem
- 5: Leitung
- 6: Ventil
- 7: Pumpe
- 8: Verdampfer
- 9: Heizung
- 10: Aufnahmebecken
- 10a: Seitenwand
- 11: Garraum
- 12: Boden
- 12a: Innenseite
- 13: Aufnahmevolumen
- 14: Verbindungselement
- 15: Ablauföffnung
- 16: Stutzen
- 17: oberer Rand
- 18: obere Kante
- 19: Filter
- 20: Filterrohr
- 20a: erster Rohrabschnitt
- 20b: zweiter rohrabschnitt
- 21: Schnappelement
- 22: unteres Ende
- 23: Mantelwand
- 24: Unterkante
- 25: Schnappelement
- 26: obere Kante
- 27: oberes Ende
- 28: Filteröffnung
- 29: Schlitz
- 30: Rinne
- 31: Lamellenstreifen
- a: Überstand
- b: Breite
- A: Längsachse

## Patentansprüche

1. Fluidverdampfer (8) für ein Dampfgargerät (1), mit einem Aufnahmebecken (10) für das Fluid (3), mit einer Heizung (9) zum Verdampfen des flüssigen Fluids (3) in dem Aufnahmebecken (10), und mit einem Filter (19), der in dem Aufnahmebecken (10) angeordnet ist, wobei das Filter (19) ein Kalkpartikelfilter ist, **dadurch gekennzeichnet, dass** das Filter (19) als ein Filterrohr (20) ausgebildet ist, wobei das Filterrohr (20) Filteröffnungen (29) aufweist, so dass beim Hindurchströmen des flüssigen Fluids (3) durch das Filterrohr (20) Kalkpartikel filterbar sind, wobei das Filterrohr (20) Schlitze (29) als Filteröffnungen aufweist und die Schlitze (29) axial zur Längsachse (A) des Filterrohrs (20) orientiert sind.

2. Fluidverdampfer (8) nach Anspruch 1, **dadurch gekennzeichnet, dass** das Aufnahmebecken (10) einen Boden (12) aufweist, in dem eine Zulauf- und/oder Ablauföffnung (15) für das flüssige Fluid (3) ausgebildet ist, wobei das Filterrohr (20) an dem Boden (12) im Bereich der Zulauf- und/oder Ablauföffnung (15) angeordnet ist, so dass das flüssige Fluid (3) beim Zulauf durch die Zulauf- und/oder Ablauföffnung (15) durch das Filterrohr (20) strömt, und/oder beim Ablauf des flüssigen Fluids (3) aus dem Aufnahmebecken (10) durch das Filterrohr (20) strömt.

3. Fluidverdampfer (8) nach Anspruch 1 oder 2, **dadurch gekennzeichnet, dass** zumindest ein Schlitz (29) eine Breite (b) zwischen 1,7 mm und 2,2 mm aufweist.

4. Fluidverdampfer (8) nach einem der vorhergehenden Ansprüche, **dadurch gekennzeichnet, dass** das Filterrohr (20) eine Länge aufweist, die größer ist, als eine Höhe zwischen dem Boden (12) des Aufnahmebeckens (10) und einem oberen, maximalen Füllstandrand (17) des Aufnahmebeckens (10).

5. Fluidverdampfer (8) nach Anspruch 4, **dadurch gekennzeichnet, dass** das Filterrohr (20) einen ersten Rohrabschnitt (20a) aufweist, der sich vom Boden (12) des Aufnahmebeckens (10) nach oben erstreckt, wobei sich der erste Rohrabschnitt (20a) über den oberen, maximalen Füllstandrand (17) des Aufnahmebeckens (10) erstreckt.

6. Fluidverdampfer (8) nach Anspruch 4 oder 5, **dadurch gekennzeichnet, dass** das Filterrohr (20) einen zweiten Rohrabschnitt (20b) aufweist, der sich in die rohrartig ausgebildete Zulauf- und/oder Ablauföffnung (15) hineinstreckt, insbesondere sich über die gesamte Länge der als Stutzen (16) ausgebildete Zulauf- und/oder Ablauföffnung (15) erstreckt.

7. Fluidverdampfer (8) nach einem der vorhergehenden Ansprüche, **dadurch gekennzeichnet, dass** das Filterrohr (20) an dem dazu separaten Boden (12) zerstörungsfrei lösbar befestigt ist.

8. Fluidverdampfer (8) nach Anspruch 7, **dadurch gekennzeichnet, dass** das Filterrohr (20) an der Zulauf- und/oder Ablauföffnung (15) durch eine Schnappverbindung befestigt ist.

9. Fluidverdampfer (8) nach Anspruch 6 und nach Anspruch 7 oder 8, **dadurch gekennzeichnet, dass** der zweite Rohrabschnitt (20b) mit oberen Schnappelemente (25) der Schnappverbindung am Boden (12) anliegt und mit unteren Schnappelemente (21) der Schnappverbindung eine Unterkante (24) der rohrartigen Zulauf- und/oder Ablauföffnung (15) hinterschnappt.

10. Fluidverdampfer (8) nach einem der vorhergehenden Ansprüche 1 bis 6, **dadurch gekennzeichnet, dass** das Filterrohr (20) und das Aufnahmebecken (10) unlösbar verbunden sind, insbesondere verschweißt oder verklebt sind.

11. Fluidverdampfer (8) nach einem der vorhergehenden Ansprüche, **dadurch gekennzeichnet, dass** das Filterrohr (20) einstückig ausgebildet ist.

12. Fluidverdampfer (8) nach einem der vorhergehenden Ansprüche, **dadurch gekennzeichnet, dass** das Filterrohr (20) aus Kunststoff oder Metall ausgebildet ist.

13. Dampfgargerät (1) mit einem Fluidverdampfer (8) nach einem der vorhergehenden Ansprüche.

## Claims

1. Fluid evaporator (8) for a steam cooking appliance (1), with a receiving basin (10) for the fluid (3), with a heater (9) for evaporating the liquid fluid (3) in the receiving basin (10), and with a filter (19), which is arranged in the receiving basin (10), wherein the filter (19) is a limescale particle filter, **characterised in that** the filter (19) is embodied as a filter tube (20), wherein the filter tube (20) has filter openings (29) so that limescale particles can be filtered when the liquid fluid (3) flows through the filter tube (20), wherein the filter tube (20) has slots (29) as filter openings and the slots (29) are oriented axially with respect to the longitudinal axis (A) of the filter tube (20).

2. Fluid evaporator (8) according to claim 1, **characterised in that** the receiving basin (10) has a base (12) in which an inlet and/or outlet opening (15) for the liquid fluid (3) is embodied, wherein the filter tube (20) is arranged on the base (12) in the region of the inlet and/or outlet opening (15) so that the liquid fluid (3) flows through the filter tube (20) when it flows in through the inlet and/or outlet opening (15), and/or flows through the filter tube (20) when the liquid fluid (3) flows out of the receiving basin (10).

3. Fluid evaporator (8) according to claim 1 or 2, **characterised in that** at least one slot (29) has a width (b) between 1.7 mm and 2.2 mm.

4. Fluid evaporator (8) according to one of the preceding claims, **characterised in that** the filter tube (20) has a length which is greater than a height between the base (12) of the receiving basin (10) and an upper, maximum fill level edge (17) of the receiving basin (10).

5. Fluid evaporator (8) according to claim 4, **characterised in that** the filter tube (20) has a first tube section (20a) which extends upwards from the base (12) of the receiving basin (10), wherein the first tube section (20a) extends over the upper, maximum fill level edge (17) of the receiving basin (10).

6. Fluid evaporator (8) according to claim 4 or 5, **characterised in that** the filter tube (20) has a second tube section (20b) which extends into the inlet and/or outlet opening (15) embodied in a tubular manner, in particular extends over the entire length of the inlet and/or outlet opening (15) embodied as a nozzle (16).

7. Fluid evaporator (8) according to one of the preceding claims, **characterised in that** the filter tube (20) is fastened in a non-destructively releasable manner to the base (12) which is separate therefrom.

8. Fluid evaporator (8) according to claim 7, **characterised in that** the filter tube (20) is fastened to the inlet and/or outlet opening (15) by way of a snap-fit connection.

9. Fluid evaporator (8) according to claim 6 and according to claim 7 or 8, **characterised in that** the second tube section (20b) with upper snap-fit elements (25) of the snap-fit connection rests on the base (12) and with lower snap-fit elements (21) of the snap-fit connection snap-fits behind a lower edge (24) of the tubular inlet and/or outlet opening (15).

10. Fluid evaporator (8) according to one of the preceding claims 1 to 6, **characterised in that** the filter tube (20) and the receiving basin (10) are connected in a non-detachable manner, in particular welded or adhesively bonded.

11. Fluid evaporator (8) according to one of the preceding claims, **characterised in that** the filter tube (20) is embodied in one piece.

12. Fluid evaporator (8) according to one of the preceding claims, **characterised in that** the filter tube (20) is embodied from plastic or metal.

13. Steam cooking appliance (1) with a fluid evaporator (8) according to one of the preceding claims.

## Revendications

1. Évaporateur de fluide (8) pour un appareil de cuisson à la vapeur (1), ayant un bassin de réception (10) de fluide (3), avec un chauffage (9) pour l'évaporation du fluide liquide (3) dans le bassin de réception (10), et avec un filtre (19) qui est disposé dans le bassin de réception (10), le filtre (19) étant un filtre à particules de calcaire, **caractérisé en ce que** le filtre (19) est réalisé sous la forme d'un tube de filtre (20), le tube de filtre (20) présentant des ouvertures de filtre (29), de sorte que lors du passage du fluide liquide (3) à travers le tube de filtre (20), des particules de calcaire peuvent être filtrées, le tube de filtre (20) présentant des fentes (29) comme ouvertures de filtre et les fentes (29) étant orientées axialement par rapport à l'axe longitudinal (A) du tube de filtre (20).

2. Évaporateur de fluide (8) selon la revendication 1, **caractérisé en ce que** le bassin de réception (10) présente un fond (12) dans lequel est formée une ouverture d'entrée et/ou de sortie (15) pour le fluide liquide (3), le tube filtrant (20) étant disposé sur le fond (12) dans la zone de l'ouverture d'entrée et/ou de sortie (15), de sorte que le fluide liquide (3) s'écoule à travers le tube filtrant (20) lors de l'arrivée par l'ouverture d'arrivée et/ou d'évacuation (15), et/ou s'écoule lors de l'évacuation du fluide liquide (3) du bassin de réception (10) s'écoulant à travers le tube filtrant (20).

3. Évaporateur de fluide (8) selon la revendication 1 ou 2, **caractérisé en ce qu'**au moins une fente (29) présente une largeur (b) comprise entre 1,7 mm et 2,2 mm.

4. Évaporateur de fluide (8) selon l'une des revendications précédentes, **caractérisé en ce que** le tube filtrant (20) présente une longueur supérieure à une hauteur entre le fond (12) du bassin de réception (10) et un bord supérieur de niveau maximal de remplissage (17) du bassin de réception (10).

5. Évaporateur de fluide (8) selon la revendication 4, **caractérisé en ce que** le tube filtrant (20) comprend une première section de tube (20a) qui s'étend vers le haut à partir du fond (12) du bassin de réception (10), la première section de tube (20a) s'étendant au-dessus du bord supérieur de niveau maximal de remplissage (17) du bassin de réception (10).

6. Évaporateur de fluide (8) selon la revendication 4 ou 5, **caractérisé en ce que** le tube filtrant (20) présente un deuxième tronçon de tube (20b) qui s'étend dans l'ouverture d'entrée et/ou de sortie (15) de forme tubulaire, en particulier s'étend sur toute la longueur de l'ouverture d'entrée et/ou de sortie (15) réalisée sous forme de tubulure (16).

7. Évaporateur de fluide (8) selon l'une des revendications précédentes, **caractérisé en ce que** le tube filtrant (20) est fixé sur le fond (12) séparé de celui-ci de manière à pouvoir être retiré sans causer de destructions.

8. Évaporateur de fluide (8) selon la revendication 7, **caractérisé en ce que** le tube filtrant (20) est fixé à l'ouverture d'entrée et/ou de sortie (15) par un assemblage par encliquetage.

9. Évaporateur de fluide (8) selon la revendication 6 et selon la revendication 7 ou 8, **caractérisé en ce que** le deuxième tronçon de tube (20b) s'appuie par des éléments d'encliquetage supérieurs (25) de l'assemblage par encliquetage sur le fond (12) et s'encliquette par des éléments d'encliquetage inférieurs (21) de l'assemblage par encliquetage derrière un bord inférieur (24) de l'ouverture d'entrée et/ou de sortie (15) de type tubulaire.

10. Évaporateur de fluide (8) selon l'une des revendications précédentes 1 à 6, **caractérisé en ce que** le tube filtrant (20) et le bassin de réception (10) sont reliés de manière indissociable, en particulier sont soudés ou collés.

11. Évaporateur de fluide (8) selon l'une des revendications précédentes, **caractérisé en ce que** le tube filtrant (20) est réalisé d'une seule pièce.

12. Évaporateur de fluide (8) selon l'une des revendications précédentes, **caractérisé en ce que** le tube filtrant (20) est réalisé en matière plastique ou en métal.

13. Appareil de cuisson à la vapeur (1) comprenant un évaporateur de fluide (8) selon l'une des revendications précédentes.
